# EUROPÄISCHE PATENTSCHRIFT

(11) **EP 1 555 846 B1**
(45) Veröffentlichungstag und Bekanntmachung des Hinweises auf die Patenterteilung: **21.10.2015**
(21) Anmeldenummer: 04100123.1
(22) Anmeldetag: 15.01.2004
(51) Int. Cl.: H04W 48/04, H04W 4/02

(54) **Verfahren zur Fernschaltung von Diensten**
Method for remote service switching
Procédé pour commander des applications à distance

(43) Veröffentlichungstag der Anmeldung: 20.07.2005
(73) Patentinhaber: Swisscom AG, 3050 Bern (CH)
(72) Erfinder: Lauper, Eric, 3014 Bern (CH)
(74) Vertreter: P&TS SA (AG, Ltd.)

(56) Entgegenhaltungen:
- EP-A- 1 223 772
- US-A1- 2003 008 662
- US-A1- 2003 133 573
- US-A1- 2003 143 954

## Beschreibung

### Technisches Gebiet

Die vorliegende Erfindung betrifft ein System und ein Verfahren um Dienste eines Mobilkommunikationsgeräts selektiv fernzuschalten.

### Stand der Technik

Mobilgeräte, insbesondere Mobilfunktelefone, sind immer weiter verbreitet. Es existieren jedoch Orte und Bedingungen, in welchen die Benutzung eines Mobilgeräts unerwünscht oder sogar gefährlich ist, so zum Beispiel in Konzertlokalen oder Flugzeugen. Da manche Mobilteilnehmer vergessen (oder darauf verzichten) ihr Mobilgerät auszuschalten, sind bereits mehrere Systeme bekannt, um diese Geräte an geschützten Orten durch Dritte zwangsweise völlig auszuschalten.

Eine komplette Ausschaltung des Mobilgeräts ist aber weder bei den Mobilteilnehmern beliebt, noch nötig oder erlaubt. In manchen Ländern müssen beispielsweise zumindest aus- und eingehende Notrufe und Notmeldungen auch in geschützten Räumen gesendet beziehungsweise empfangen werden können. Sprach - oder Datenverbindungen der Gäste brutal zu unterbrechen ist sicher keine gute Kundenwerbung. Ausserdem ist eine komplette Abschaltung des Geräts oft nicht mal nötig; in einem Flugzeug zum Beispiel sind vor allem die Sende- und Empfangsfunktionen des Transceivers potentiell gefährlich; Gründe, um Passagieren etwa ein Spiel mit dem Mobilgerät zu verbieten gibt es hingegen nicht. An anderen Orten sind vor allem die Kamerafunktion modernerer Mobilfunktelefone problematisch, nicht jedoch das Mobilfunkteil.

Deshalb wurden bereits Systeme und Verfahren beschrieben, mit welchen die Kamera, oder andere "Optionen" und Gerätteile ferngeschaltet werden können.

Zu diesem Zweck wird meistens ein lokales, proprietäres Sperrsignal im geschützten Raum übertragen. Die auszuschaltenden Mobilgeräte empfangen das Signal und deaktivieren den betroffenen Mobilgerätteil. Solche Verfahren funktionieren jedoch nur mit speziell angepassten Mobilgeräten, die über zusätzliche Hardware und Software verfügen, um das Sperrsignal zu empfangen und zu interpretieren. Solange nicht eine grosse Anzahl von Mobilgeräten entsprechend angepasst sind, sind solche Schutzmassnahmen kaum effektiv und können einfach umgangen werden.

US20030133573 beschreibt eine Lösung, in welcher Mobilgerätteile in einem Raum durch ein Bluetooth Signal deaktiviert werden. Auch diese Lösung funktioniert nur mit Geräten, die über einen Bluetooth-Teil verfügen und diesen Teil aktiviert haben. Ein spezielles Bluetooth-Profil muss ausserdem installiert werden, um das Signal zu verstehen und im Nachhinein den gewünschten Gerätteil auszuschalten. Ausserdem können mit diesem Verfahren nur Endgeräte deaktiviert werden, die sich innerhalb der Tragweite des Bluetooth-Senders im geschützten Raum befinden; standortunabhängige Sperrungen sind nicht möglich.

WO9825433 beschreibt ein anderes Verfahren, mit welchem ein Mobilfunknetzbetreiber ein Endgerät abhängig vom Standort komplett abschalten kann. Andere Abschaltkriterien sind nicht erwähnt.

US5778304 beschreibt ein System zur standortabhängigen Einschränkung von Mobilgerätdiensten; als Beispiele werden die maximale Lautstärke, die Verwendung des Mobilgeräts für private Anrufe, die Datenübertragung, die Bildübertragung, usw., erwähnt. Ausserdem wird in diesem Verfahren der vom Mobilfunknetzbetreiber ermittelte Mobilteilnehmerstandort als Parameter für die Entscheidung zur Sperrung eines Geräts verwendet. Das Verfahren kann daher nur vom Mobilfunknetzbetreiber eingesetzt werden, oder zumindest von einer Partei, die über diese üblicherweise vertrauliche Angabe verfügt.

US2003008662 offenbart ein System und ein Verfahren, um ein Mobilgerät entsprechend einer standortabhängigen Richtlinien und Informationen zu versorgen.

US2003133573 offenbart ein System und ein Verfahren, um Kontrollmeldungen zu elektronischen Vorrichtungen zu senden.

EP1223772 offenbart ein System und ein Verfahren, um ein Mobilgerät standortabhängig mit Meldungen zu sperren.

### Offenbarung der Erfindung

Zusammengefasst leiden die bekannten Systeme und Verfahren, um Dienste eines Mobilkommunikationsgeräts abzuschalten unter folgenden Problemen:
■ Es können nur komplette Geräte ausgeschaltet werden, nicht aber selektiv bestimmte Dienste, und/oder
■ Endgeräte-Hardwareanpassungen werden benötigt, um ein spezielles Sperrsignal zu empfangen, oder um den Standort des Geräts zu bestimmen, und/oder
■ Die Fernsperrfunktion kann vom Mobilteilnehmer abgeschaltet werden, und/oder
■ Es können nur Mobilgeräte innerhalb eines bestimmten Raums gesperrt werden, und/oder
■ Das Verfahren kann nur vom Mobilfunknetzbetreiber eingesetzt werden, und/oder
■ Der Standort der Mobilteilnehmer bleibt gegenüber von Dritten nicht anonym, und/oder
■ Bestehende Sprach- und Datenverbindungen werden auf unhöfliche Art unterbrochen.

Es ist ein Ziel der vorliegenden Erfindung, ein neues Verfahren und System anzubieten, mit welchem alle oder gewisse dieser Probleme gelöst werden.

Ein anderes Ziel ist es, eine höhere Flexibilität bei der Ermittlung der gesperrten Mobilgeräte anzubieten.

Diese Ziele werden insbesondere durch die Merkmale der unabhängigen Ansprüche erreicht:

Dies hat insbesondere den Vorteil, dass Dienste des Mobilgeräts selektiv von einem Ferngerät ein- oder ausgeschaltet werden können. Dies erfolgt, wenn frei definierbare Bedingungen erfüllt sind. Da diese Schaltbedingungen jederzeit (vorzugsweise über ein Computerprogramm) editierbar und aktualisierbar sind, können sehr flexible Bedingungen definiert werden, um zu entscheiden, welche Mobilgeräte ferngeschaltet werden.

Dies hat ausserdem den Vorteil, dass die Aktivierung oder Deaktivierung von Funktionen des Mobilgeräts durch Ein- oder Ausschalten von Diensten erfolgt. Dienste sind permanente Programme oder Programmteile, die aktiviert werden müssen, damit das Betriebssystem und Anwendungen des Mobilgeräts auf entsprechende Hardware- oder Software-Ressourcen zugreifen kann. In modernen Betriebssystemen gibt es eine grosse Anzahl von installierten Diensten, mit welchen das Verhalten des Mobilgeräts fein eingestellt werden kann. Gewisse Dienste können beispielsweise Gerätetreiber umfassen, so dass ein Hardwareteil unerreichbar ist, wenn der entsprechende Dienst deaktiviert ist. Andere Dienste können Benutzeranwendungen oder Teile des Betriebssystems steuern, beispielsweise der Internet- oder Mobilfunknetzzugriff.

Der aktive oder inaktive Zustand eines Dienstes wird oft mit einem einfachen Flag angegeben, dessen Zustand mit einem kleinen Softwareaufwand geändert werden kann.

Die Erfindung hat ausserdem den Vorteil, dass die Bedingungen, mit welchen angegeben wird, wann ein Mobilgerätdienst ferngeschaltet werden muss, frei definierbar sind. Die Steuerung ist somit nicht nur vom Mobilteilnehmerstandort abhängig, sondern von beliebigen anderen Parametern, die innerhalb und/oder ausserhalb der Infrastruktur des Mobilfunknetzes ermittelt werden. In einem Unternehmen kann beispielsweise entschieden werden, die Kamerafunktion aller Mobilgeräte einer Gruppe von Angestellten oder Kunden gleichzeitig ein- oder auszuschalten (unabhängig vom jeweiligen Standort).

In einer bevorzugten Ausführungsform wird der ein- oder auszuschaltende Dienst vom Ferngerät unter mehreren Möglichkeiten gewählt und im Schaltbefehl angegeben. Dies hat den Vorteil, dass das Ferngerät präzis bestimmen kann, welche Teile des Mobilgeräts ein oder ausgeschaltet werden können. Abhängig von unterschiedlichen Bedingungen können somit unterschiedliche Gerätdienste von unterschiedlichen Sets von Mobilgeräten abgeschaltet werden. Eltern können beispielsweise Ihren Kindern den Zugriff auf Spiele oder kostenpflichtige Dienste nur während vorbestimmten Zeitperioden erlauben.

In einer bevorzugten Ausführungsform werden die Schaltbedingungen von einem Dritten (und nicht vom Mobilfunknetzbetreiber) festgelegt. Somit können beliebige Dritten bestimmen, unter welchen Bedingungen gewisse Mobilgerätdienste fremder Mobilgeräte eingeschränkt werden sollen. Bevor ein Dienst ausgeschaltet wird, wird vorzugsweise vom Mobilfunknetzbetreiber, von einer Regulierungsinstanz und/oder vom betroffenen Mobilteilnehmer geprüft, ob die Sperrung eines bestimmten Dienstes zulässig ist.

In einer bevorzugten Ausführungsform sind die Schaltbedingungen von Parametern abhängig, die innerhalb und ausserhalb der Infrastruktur des Mobilfunknetzes ermittelt werden. Auf diese Weise können komplexere Schaltbedingungen verwendet werden, etwa um alle Mobilgeräte an einem Ort komplett zu sperren, ausser jene der Angestellten, wobei Spielanwendungen und die Kamera von gewissen Angestellten auch abgeschaltet wird. Auch kommerzielle Modelle zur Freischaltung von vorhandenen Diensten durch einen Dritten gegen eine Gebühr werden dadurch ermöglicht.

In einer bevorzugten Variante sind mindestens gewisse Schaltbefehle anonym gegenüber dem Administrator des fernsteuernden Ferngeräts. Auf diese Weise kann ein Dritter bestimmte Dienste einer Gruppe von Mobilgeräten (die bestimmte Bedingungen erfüllen) ein- oder ausschalten, ohne die Identität der betroffenen Mobilteilnehmer zu kennen. Dadurch werden Datenschutzprobleme gelöst, die dann eintreten würden, wenn jeder Dritte alle benötigten Parameter einer grossen Anzahl vom Mobilteilnehmer erfahren würde.

### Kurze Beschreibung der Zeichnungen

Die Figur 1 ist ein Blockschema der Software-Architektur eines Mobilgeräts.

Die Figur 2 ist ein Blockschema einer ersten Ausführungsform des Systems der Erfindung.

Die Figur 3 ist ein Blockschema einer zweiten Ausführungsform des Systems der Erfindung.

Die Figur 4 ist ein Blockschema einer dritten Ausführungsform des Systems der Erfindung.

Die Figur 5 zeigt einen Bildschirm der Eingabemaske, die im Ferngerät verwendet werden kann, um Schaltbedingungen einzugeben.

Die Figur 6 ist ein Flussdiagram des Verfahrens einer Ausführungsform der Erfindung.

### Definitionen

In der Beschreibung und in den Ansprüchen ist, wenn über Dienste gesprochen wird, ein Programm, Programmteil oder Applet gemeint, das permanent oder temporär im Hintergrund läuft und periodische Abfragen von anderen Programmen bearbeitet. Die meisten Komponenten und Ressourcen eines Rechnersystems (einschliesslich Mobilgeräte und Mobilfunktelefone) werden von einem Dienst gesteuert, der dem Betriebssystem und Benutzeranwendungen Zugriff auf die entsprechenden Ressourcen erlaubt. Bei Unix-basierten Betriebssystemen werden manche Dienste auch Daemons genannt. Manche Dienste werden auch Gerätetreiber genannt, oder verwenden Gerätetreiber. In manchen einfachen Software-Architekturen sind manche Dienste auch als Funktionen, Module oder andere Teile von Programmen des Betriebsystems oder der Anwendungen vorhanden, die somit direkt auf die entsprechenden Komponenten zugreifen.

Andere Dienste existieren als permanent verfügbare Schnittstellen, um Abfragen an andere Programme weiterzuleiten. WEB-Server haben beispielsweise einen HTTP-Dienst, der kontinuierlich auf Abfragen von WEB-Benutzer wartet und diese weiterleitet.

Wenn wir über Mobilgeräte sprechen, meinen wir Mobilfunktelefone, PDAs, Kameras, Videos und Rechnersysteme, die von einem Mobilteilnehmer getragen werden können und die über eine Schnittstelle zu einem drahtlosen Kommunikationssystem verfügen. Populäre Mobilgeräte umfassen GSM und UMTS-Mobilfunktelefone.

Wenn wir über Mobilfunknetze sprechen, meinen wir öffentliche Netze, vor allem zellulare telefonische Mobilfunknetze.

Wenn wir über ein Ferngerät sprechen, meinen wir ein Gerät, System oder Gruppe von Geräten, Vorrichtungen, Systemen und/oder Software-Agents, die sich ausserhalb des Mobilgeräts befinden und über ein Telekommunikations-Fernnetz mit diesem Mobilgerät kommunizieren können.

### Ausführungsformen der Erfindung

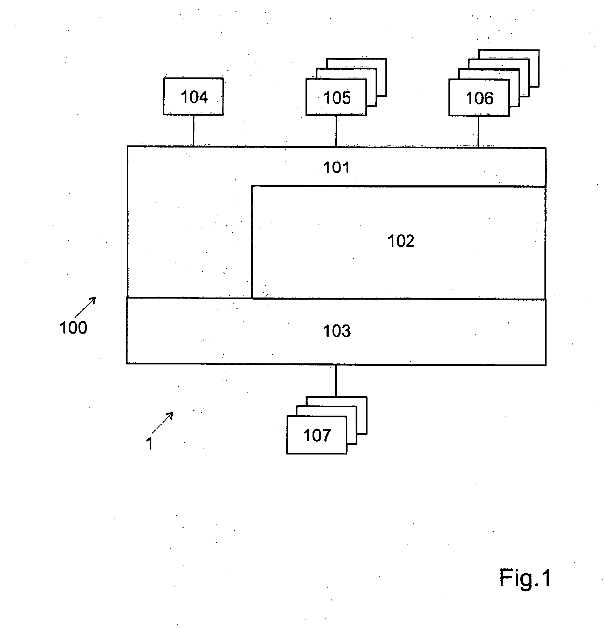

Die Figur 1 ist ein Blockschema der typischen Software-Architektur eines Mobilgeräts 1. Die schematisch illustrierte Architektur wird beispielsweise, mit einigen Unterschieden, in Symbian ™, Windows CE™ und reinen JAVA ™ Mobilgeräten verwendet.

Die Software umfasst ein Betriebssystem 100 mit einem zentralen Kernel 102, der unter anderem für die Verwaltung der Dateien und des Speichers verantwortlich ist. Eine optionale obere Protokollschicht 101 des Betriebssystems 100 ist zuständig für die Verwaltung der visuellen oder grafischen Oberfläche. Eine untere Schicht 103 umfasst Gerätetreiber und andere spezielle Dienste, mit welchen das Betriebsystem 102 und andere Anwendungen auf unterschiedliche Hardware-Komponenten 107 des Mobilgeräts zugreifen können. Diese Komponenten 107 umfassen beispielsweise:
■ Die Tastatur
■ Andere Eingabemittel, wie Joystick, zusätzliche Knöpfe, Rollelement, usw.
■ Eine oder mehrere Anzeigen
■ Ein Lautsprecher und ein Mikrophon
■ Eine Vibrierfunktion
■ Mindestens einen Transceiver (Sendeteil und Empfangsteil) für den Zugriff auf ein oder mehrere Mobilnetze
■ Einen Chipkartenleser für die SIM-Karte und/oder für externe Chipkarten
■ Eine statische- oder Video-Kamera
■ Ein Blitzgerät
■ Eine Peripherie-Schnittstelle
■ Eine infrarote Schnittstelle
■ Eine Bluetooth Schnittstelle
■ Eine WLAN Schnittstelle
■ Rington
■ Alarm
■ Musik- oder Videowiedergabe
■ usw.

Die Software-Architektur umfasst auch System-Prozesse 104, andere Dienste 105 (zum Beispiel permanente Programme, einschliesslich JAVA-Programme) und Benutzeranwendungen 106.

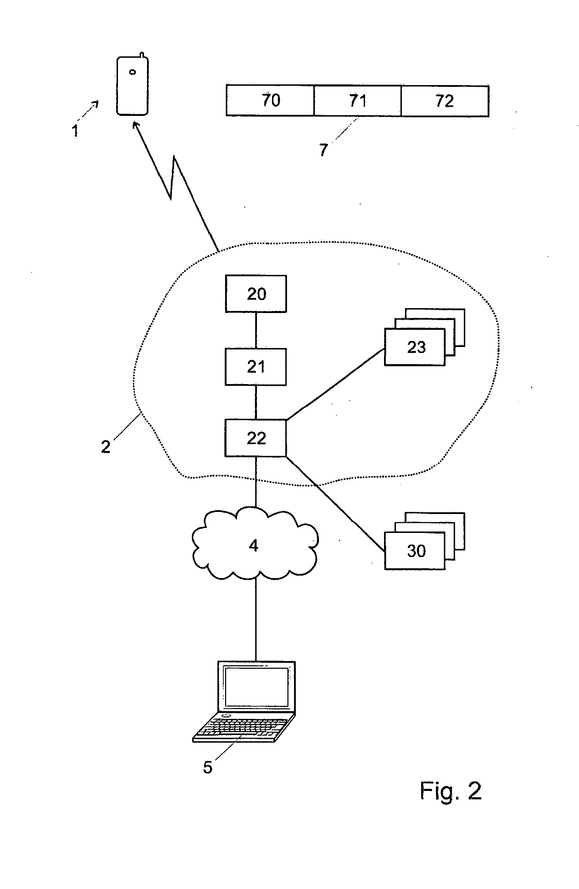

Die Figur 2 ist ein Blockschema einer ersten Ausführungsform des Systems der Erfindung mit einem Mobilgerät 1 (ME), das Komponenten und Ressourcen umfasst, die von Diensten gesteuert werden. Das Mobilgerät 1 ist in einem Mobilfunknetz 2 angemeldet (zum Beispiel ein GSM oder UMTS-Netz). Das Mobilfunknetz umfasst eine (oder ist vernetzt mit einer) Vielzahl von Basisstationen 20, eine Heimdateiregister (HLR, nicht dargestellt), und einen Meldungshandler (zum Beispiel ein SMS-Handler (SMSC)), einen USSD-Handler und/oder einen TCP-IP-Server, um beziehungsweise SMS-Kurzmeldungen, USSD (Unstructured Supplementary Service Data) und/oder Internet Pakete weiterzuleiten. Die Komponenten 20 und 21 können konventional sein.

Das erfindungsgemässe Mobilfunknetz 2 umfasst ausserdem ein Ferngerät 22 (zum Beispiel einen Server oder mehrere vernetzte Rechnersysteme) mit welchem Schaltbedingungen bestimmt, angepasst und getestet werden können, und welches einen Befehl automatisch auslöst und an das Mobilgerät 1 sendet, wenn gewisse Schaltbedingungen erfüllt sind. In dieser Variante wird dieses Ferngerät vom Betreiber des Mobilfunknetzes 2 (oder eines Netzes mit einem Roaming-agreement) betrieben und ist somit Teil der Infrastruktur dieses Netzes. Der Server 22 umfasst vorzugsweise eine nicht dargestellte Datenbank von Schaltbedingungen, die vom Netzbetreiber und/oder von mehreren Drittparteien 5 über ein Telekommunikationsnetz 4 (zum Beispiel Internet) festgelegt werden, und ein Programm, mit welchem kontinuierlich oder periodisch geprüft wird, ob gewisse oder alle Teilnehmer des Mobilfunknetzes 2 diese Schaltbedingungen erfüllen. Zu diesem Zweck erhält das Gerät 22 ständig aktualisierte Parameter aus Systemen 23 innerhalb der Infrastruktur des Mobilfunknetzes und/oder aus externen Systemen 30. Diese Parameter können vom Ferngerät 22 getestet werden und lösen das Fernschalten eines Dienstes in einem Mobilgerät 1 aus, wenn sie die vorbestimmten Schaltbedingungen erfüllen.

Die innerhalb der Infrastruktur des Mobilfunknetzes ermittelten Parameter umfassen beispielsweise:
■ Den von einem Standortbestimmungsmodul ermittelten Standort des Mobilteilnehmers, der mit einem Satelliten-Standortbestimmungsmodul im Mobilgerät 1 und/oder anhand der in den Basisstationen empfangenen Signale zum Beispiel anhand eines Triangulationsverfahrens ermittelt werden kann.
■ Die Zeit, den Wochentag und/oder das Datum.
■ Die für jeden Mobilteilnehmer und/oder für jede Basisstation verfügbare Bandbreite für die Datenübertragung.
■ Die Identität des Heimnetzbetreibers.
■ Die Netzbelastung (zum Beispiel die Anzahl Mobilteilnehmer in einem Gebiet).
■ Die Anwesenheit von prioritären Mobilteilnehmern in einem Gebiet.
■ Der Zustand (zum Beispiel ein oder aus) eines anderen Mobilgeräts und/oder eines Dienstes in einem anderen Mobilgerät.
■ Die Identität des Mobilfunknetzes, in welchem ein Mobilteilnehmer momentan angemeldet ist (Heimnetz oder besuchtes Netz).
■ Den verfügbaren Saldo auf einem vorbezahlten Konto des Mobilteilnehmers beim Netzbetreiber und/oder bei einem Dritten, wobei das Konto mit der IMSI und/oder mit der MSISDN der SIM-Karte verbunden sein kann.
■ Die Solvabilität des Mobilteilnehmers.
■ Merkmale des Mobilgeräts (Marke, Model, Typ, technische Merkmale, Version des Betriebsystems, verfügbarer Speicher, usw.)
■ Merkmale der SIM-Karte innerhalb des Mobilgeräts (Typ, verfügbarer Speicher, technische Merkmale, usw.)
■ Das Profil des Mobilteilnehmers.
■ Den Empfang eines Fernsteuerungsbefehls aus einem anderen Mobilgerät.
■ usw.

Die ausserhalb der Infrastruktur des Mobilfunknetzes ermittelten Parameter umfassen beispielsweise:
■ Die Zeit, den Wochentag und/oder das Datum.
■ Das Vorhandensein des Mobilteilnehmers auf einer vorbestimmten Liste.
■ Das Vorhandensein von bestimmten Mobilgeräten in der Nähe eines anderen bestimmten Mobilteilnehmers, wobei dies durch eine kontaktlose Interaktion im Nahbereich (zum Beispiel über Bluetooth) ermittelt wird.
■ Parameter, die im ferngeschalteten Mobilgerät 1 ermittelt werden und anhand eines zusätzlichen Programms an das Ferngerät 22 übermittelt werden, einschliesslich Anweisungen des Mobilteilnehmers oder Empfang von Signalen aus der Bluetooth, IrdA, WLAN usw. -Schnittstelle.
■ Bedingungen, die von guten Sitten und anderen Gewohnheiten abhängig sind (etwa um Foto in bestimmten Bereichen zu verbieten).
■ usw.

Vorzugsweise werden mindestens zwei beliebige dieser Parameter beliebig anhand von frei definierbaren Schaltbedingungen kombiniert, um innerhalb des Ferngeräts 22 zu bestimmen, ob gewisse Dienste gewisser Mobilgeräte 1 gesperrt oder freigestellt werden sollen. In einer bevorzugten Variante können drei, oder vorzugsweise noch mehr, von diesen Parametern kombiniert werden für eine höhere Flexibilität bei der Feststellung der Fernschaltungs-Bedingungen. Vorzugsweise können sowohl Parameter, die innerhalb der Infrastruktur des Mobilfunknetzes ermittelt werden, als auch externe Parameter, beispielsweise Parameter, die von einer Drittpartei 5 und/oder von mehreren unterschiedlichen Drittparteien bestimmt oder angegeben werden, kombiniert werden. Es können vorzugsweise auch gleichzeitig Parameter, die spezifisch ein Mobilgerät betreffen (zum Beispiel dessen Standort) als auch mobilgerätunabhängige Parameter kombiniert werden. Parameter, die im Mobilgerät 1 selbst ermittelt werden, können ausserdem beliebig mit anderen Parametern des Netzes 2 und/oder externen Parametern kombiniert werden.

Sobald eine Schaltbedingung erfüllt ist, wird ein Schaltbefehl 7 gesendet und über das Mobilfunknetz und den Meldungshandler 21 an das Mobilgerät 1 gesendet, in welchem ein Dienst ein- oder ausgeschaltet werden muss. Der Schaltbefehl enthält typischerweise einen Vorsatz 70 mit der Adresse des Mobilgeräts, einen Ein- oder Aus-Schaltbefehl 71 und die Angabe 72 über den oder die zu schaltenden Dienste. Es können beispielsweise SMS (zum Beispiel SMS, die Befehle gemäss dem Verfahren von EP689368 enthalten), USSD, Emails mit einem ausführbaren Inhalt, JAVA-Applets, HTML- oder WML-Inhalt oder andere vom Betriebssystem des Mobilgeräts 1 oder der den Mobilteilnehmer identifizierenden SIM-Karte im Mobilgerät 1 ausführbare Dateien gesendet werden.

Der im Befehlteil 72 angegebene Dienst kann auch vom Typ, Model und technischen Merkmalen des Mobilgeräts 1 abhängig sein, wenn diese Merkmale von der Drittpartei 5 und/oder vom Mobilfunknetz bekannt sind. Auch der ausgesendete Befehl kann vom Mobilgerät abhängig sein um Unterschiede bei der Hardware und bei dem Betriebssystem zu berücksichtigen. Es können beispielsweise JAVA-Applet an ein JAVAfähiges Mobilgerät und SMS-Befehle an Mobilgeräte von denen nicht sicher ist, ob sie JAVA interpretieren können, gesendet werden.

Der Befehl wird durchgeführt, indem der ein- oder auszuschaltende Dienst, JAVA-Programm oder Gerättreiber softwaregesteuert einoder ausgeschaltet wird.

Das Mobilgerät 1 sendet eine Bestätigung an das Ferngerät 22, wenn der benannte Befehl durchgeführt wird.

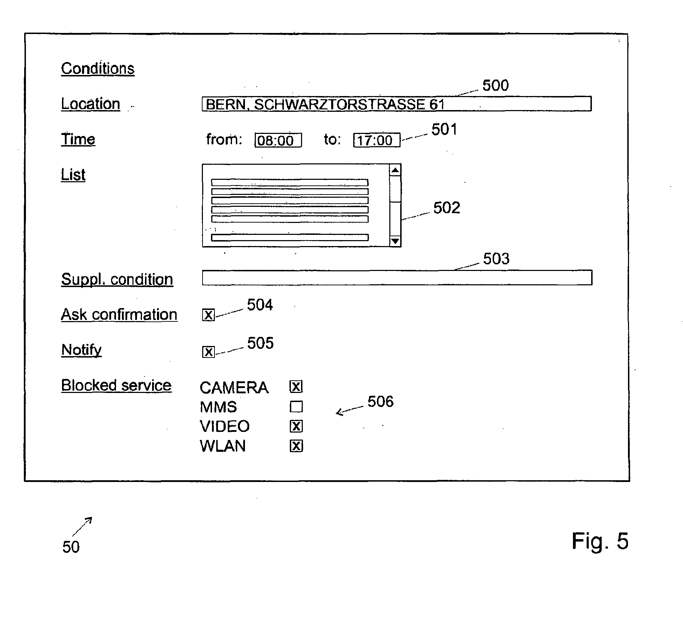

Die Figur 5 zeigt einen Bildschirm der Eingabemaske, die im Ferngerät 22 und/oder im Terminal 5 einer Drittpartei verwendet werden kann um Schaltbedingungen einzugeben. Diese Maske wird beispielsweise als Web-Seite im Ferngerät 22 generiert, beispielsweise anhand ASP-, .NET-, JAVA-, JAVAscript-, PERL- usw. -Programmierungstechnik und mit einem Web-Browser bei der Drittpartei 5 wiedergegeben und editiert. Eine elektronische Maske, die nicht auf Internetbasis beruht oder eine Fax- oder Papierform ist auch denkbar. Ausserdem können die benötigten Angaben über SMS, WAP, USSD oder andere Bearers, die von Mobilgeräten gesendet werden können, mit einem Mobilgerät der Drittpartei 5 vorbereitet werden.

Die als Beispiel auf der Figur 5 dargestellte Eingabemaske, erlaubt es einer Drittpartei mehrere Parameter miteinander zu kombinieren um eine Schaltbedingung zu bestimmen oder nachträglich anzupassen. Die Drittpartei kann vorzugsweise jederzeit bestehende Bedingungen anpassen, löschen, oder neue Schaltbedingungen vorbereiten. Der Zugriff auf diese Eingabemaske wird vorzugsweise mit einem Passwort oder einem anderen Authentisierungsmechanismus geschützt. Dieser Zugriff wird vorzugsweise vom Betreiber des Mobilfunknetzes verrechnet; möglich ist es auch, dass jeder ausgelöste Schaltbefehl oder Schaltvorgang verrechnet wird.

Die Eingabemaske der Figur 5 enthält ein Feld, in welcher ein Standort angegeben werden kann, in diesem Fall "Bern, Schwarztorstrasse 61 ". Ein zu sperrender Standort könnte auch als Variante graphisch auf einer Karte mit geographischen Koordinaten relativ zum Standort eines Mobilgeräts usw. angegeben werden. Der Standort könnte auch implizit sein. Eine Liste von mehreren zu sperrenden geographischen Gebieten ist auch denkbar. Vorzugsweise können auch abstrakte Einheiten angegeben werden (zum Beispiel "Komische Oper Berlin", "alle Schwimmhallen" oder "in öffentlichen Verkehrsmitteln") in diesem Fall wird die Korrespondenz zwischen der angegebenen abstrakten Einheit und dem gesperrten Gebiet vorzugsweise im Ferngerät geführt.

Das Feld 501 enthält eine Zeitspanne, hier von 08:00 bis 17:00, während welcher Mobilgerätdienste ein- oder ausgeschaltet werden sollen. Kompliziertere Zeitangaben, die zum Beispiel vom Datum, Wochentag, oder von periodisch wiederholbaren Zeitperioden abhängig sind, sind auch denkbar. Die Zeitspanne kann mit einem Anfang und einem Ende angegeben werden (wie im dargestellten Beispiel) oder mit einer Dauer, (etwa die Dauer eines Spektakels während welchem Fotos verboten sind). Es können für gewisse Anwendungen auch sehr kurze Zeitspannen angegeben werden, einschliesslich Zeitspannen kürzer als eine Minute oder gar als eine Sekunde, oder Zeitperioden- oder eine Dauer, die von externen Ereignissen abhängig sind.

Das Feld 502 enthält eine Liste von Mobilgeräten, die ferngeschaltet werden können. Mobilgeräte können beispielsweise mit der Rufnummer (MSISDN), mit dem eindeutigen Namen des Mobilteilnehmers, mit einer Referenz zu einer bekannten Gruppe (zum Beispiel alle Mobilteilnehmer eines Mobilnetzbetreibers) usw. angegeben werden. Die Liste kann entweder offen sein - in diesem Fall kann die Drittpartei 5 Dienste jedes fremden Mobilgeräts fernsteuern - oder geschlossen sein -wobei die Drittpartei nur gewisse Mobilgeräte fernsteuern kann, beispielsweise die Mobilgeräte von Mobilteilnehmern, die eine solche Fernschaltung explizit zugelassen haben oder die Mobilgeräte von affilierten oder verwandten Mobilteilnehmern.

Das Feld 503 erlaubt es der Drittpartei zusätzliche Bedingungen anzugeben, beispielsweise als SQL- oder Pseudo-SQL-Bedingungen.

Mit dem Kreuzfeld 504 gibt die Drittpartei an, ob eine Bewilligung des betroffenen Mobilteilnehmers angefragt werden soll, bevor ein Dienst seines Mobilgeräts aus- oder eingeschaltet wird.

Mit dem Kreuzfeld 505 gibt die Drittpartei an, ob der betroffene Mobilteilnehmer informiert wird, wenn ein Dienst aus- oder eingeschaltet wird.

Das Feld 506 enthält eine Liste von mehreren Diensten, die im dargestellten Beispiel ausgeschaltet werden müssen, wenn die anderen Bedingungen erfüllt sind.

Im dargestellten Beispiel wird somit täglich zwischen 08:00 und 17:00 die Kamera, die Videofunktion und die WLAN-Schnittstelle der Mobilgeräte aller Mobilteilnehmer, die im Feld 502 angegeben sind und die sich an der angegebenen Adresse befinden ein- und ausgeschaltet, wobei die betroffenen Mobilteilnehmer informiert werden, und wobei um ihre Bewilligung angefragt wird. Dieser Satz von Bedingungen kann beispielsweise verwendet werden, um Angestellten einer Firma zu verbieten während der Arbeitszeit Fotos an der Arbeitstelle zu machen und sich mit dem WLAN des Unternehmens zu verbinden.

Andere Bedingungen können festgelegt werden, um etwa nicht-Angestellten zu verbieten, Fotos in einem Unternehmen zu machen.

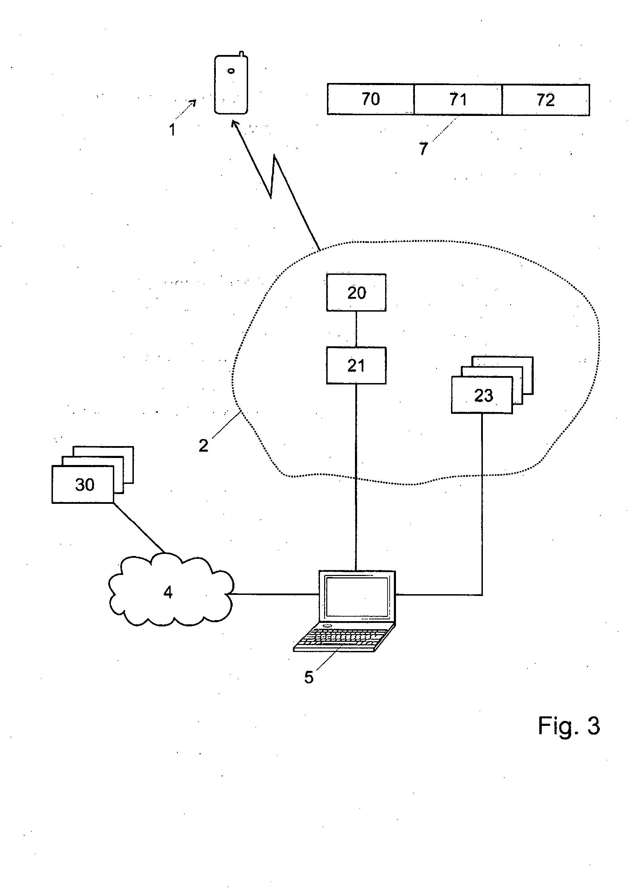

Die Figur 3 zeigt eine Ausführungsform der Erfindung, in welcher das Ferngerät 5, in welchem die Schaltbedingungen geprüft werden, sich ausserhalb der Infrastruktur des Mobilfunknetzes 2 befindet. Das Ferngerät 5 kann beispielsweise direkt von einer Drittpartei, zum Beispiel einem Mehrwert-Dienstanbieter, betrieben werden. Die Schaltbedingungen verwenden Parameter, die innerhalb des Ferngeräts 5 ermittelt werden, externe Parameter, die beispielsweise über das Internet 4 aus mehreren externen Vorrichtungen erhalten werden, sowie möglicherweise Parameter, die innerhalb des Mobilfunknetzes 2 ermittelt werden und vom Mobilfunknetzbetreiber kommuniziert werden.

Wird ein vorbestimmter Satz von Schaltbedingungen erfüllt, sendet das Ferngerät einen Befehl, beispielsweise ein SMS, ein USSD, ein TCP-IP-Befehl usw. über das Mobilfunknetz 2 an die betroffenen Mobilgeräte, die diesen Befehl dann ausführen.

Da es in der Praxis unwahrscheinlich ist, dass der Mobilteilnehmer viele möglicherweise vertrauliche Parameter an eine Drittpartei sendet, ist diese Variante vor allem geeignet, um Mobilgeräte von den der Drittpartei bekannten Mobilteilnehmern fernzusteuern.

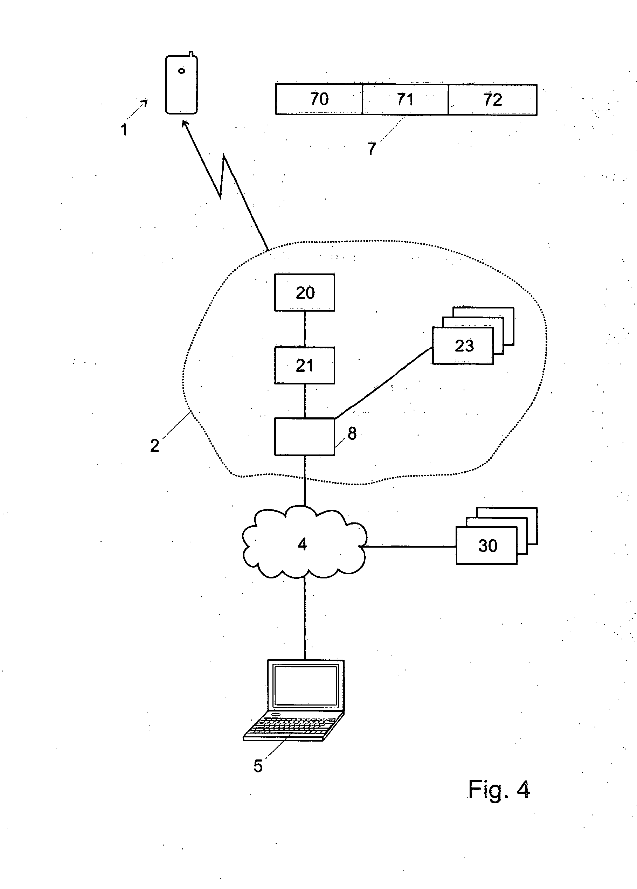

Die Figur 4 zeigt eine Ausführungsform der Erfindung, in welcher das Ferngerät 5, in welchem die Schaltbedingungen geprüft werden, sich auch ausserhalb der Infrastruktur des Mobilfunknetzes 2 befindet. In diesem Fall erhält jedoch dieses Ferngerät anonymiserte interne Parameter des Mobilfunknetzes 2, die an verschiedenen Stellen 23 innerhalb des Netzes 2 ermittelt werden und über einen Proxy-Anonymisierungsserver 8 derart anonymisiert sind, dass der Betreiber des Ferngeräts nicht erfahren kann, welche Parameter welchem Mobilteilnehmer entsprechen. Dies hat den Vorteil, dass eine Drittpartei somit anonyme Befehle senden kann, um etwa Dienste der Mobilgeräte, die sich etwa an einem besonderen Standort befinden ein- oder auszuschalten, ohne die Identität der betroffenen Mobilteilnehmer zu erfahren. Die anonymen Befehle werden im Proxy-Server entanonymisiert, indem ein Alias durch die richtige Identität ersetzt und an die betroffenen Mobilgeräte 1 weitergeleitet werden.

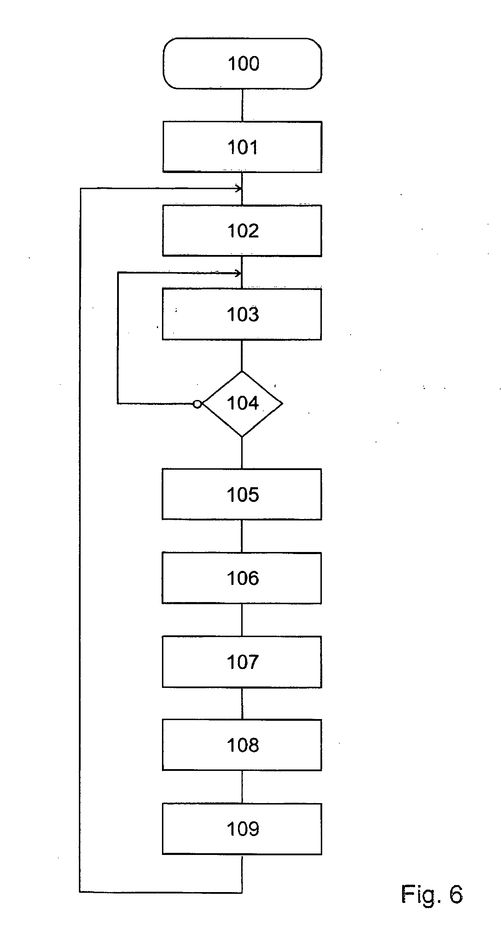

Die Figur 6 ist ein Flussdiagramm des Erfindungsverfahrens. Das Bezugszeichen 100 zeigt den Anfang des Verfahrens. Beim Schritt 101 wird ein Satz von Schaltbedingungen initial bestimmt, beispielsweise bei dem ersten Zugriff der Drittpartei 5 auf das Ferngerät. Der initiale Satz von Bedingungen kann auch leer sein, indem keine Bedingung initial gesetzt wird. Die Drittpartei 5 hat dann die Möglichkeit, diesen Satz von Bedingungen beliebig oft beim Schritt 102 anzupassen und zu ergänzen.

Die gesetzten Verbindungen werden dann während dem Schritt 103 vom Ferngerät 22 geprüft. Dieser Test wird kontinuierlich oder periodisch wiederholt, solange die gesetzten Bedingungen nicht erfüllt sind (Lozenge 104).

Ist eine Bedingung für mindestens einen Dienst eines Mobilgeräts erfüllt, wird ein entsprechender Schaltbefehl beim Schritt 105 ausgelöst und während dem Schritt 106 über das Mobilfunknetz 2 und den Meldungshandler 21 an das oder die betroffenen Mobilgeräte übermittelt.

In einer bevorzugten Variante wird um eine Bestätigung eines Mobilteilnehmers gebeten (oder kann gebeten werden), bevor der Schaltbefehl gesendet wird. Der Schaltbefehl wird in diesem Fall erst dann ausgeführt, wenn der Mobilteilnehmer dies bewilligt hat. In einer anderen Variante wird oder kann eine einfache Meldung an das Mobilgerät 1 übermittelt werden, bevor oder nachdem ein Dienst ein- oder ausgeschaltet wird. Die Meldung kann auch vom Mobilgerät erzeugt werden; sie kann auch angeben, dass ein Dienst 105, 107 nach einer vorbestimmten Zeitspanne ein- oder ausgeschaltet wird. Die Meldung und/oder die Bitte um eine Bestätigung wird möglicherweise auch im multimodalen Modus während einer Sprachverbindung wiedergegeben.

Dieser Schaltbefehl wird möglicherweise während Schritt 107 vom Proxy 8 entanonymisiert. Der Befehl wird dann während dem Schritt 108 vom Mobilgerät 1 empfangen und beim Schritt 109 durchgeführt, wobei die Ein- oder Ausschaltung des Dienstes möglicherweise erst nach einer Zeitspanne, nach dem Ende einer Verbindung oder nach der expliziten Bewilligung des betroffenen Mobilteilnehmers erfolgt.

## Patentansprüche

1. Verfahren, um mindestens einen Dienst (103, 105) eines in einem Mobilfunknetz (2) registrierten Mobilgeräts (1) selektiv mit einem von einem Ferngerät (22) gesendeten Befehl (7) fernzuschalten, ohne das ganze Mobilgerät (1) auszuschalten, **gekennzeichnet durch** folgende Schritte:
Bestimmung und nachträgliche Anpassung eines Satzes von Schaltbedingungen (500-506) von einer Drittpartei (5);
Test im Ferngerät (22), ob das Mobilgerät (1) die Schaltbedingungen (500-506) erfüllt,
Automatische Auslösung des Befehls (7), wenn die Schaltbedingungen (500-506) erfüllt sind;
Sendung des Befehls (7) an das Mobilgerät (1);
Empfang des Befehls (7) **durch** das Mobilgerät (1);
Ein- oder Ausschaltung des Dienstes (103, 105) im Mobilgerät (1), wobei der benannte ein- oder auszuschaltende Dienst (103, 105) im benannten Befehl (7) angegeben ist und wobei die Schaltbedingungen (500-506) mindestens einen Parameter aus der folgenden Liste berücksichtigen:
- momentan verfügbare Bandbreite für die Datenübertragung;
- Mobilgerätdichte;
- Netzbelastung;
- Anwesenheit von prioritären Mobilteilnehmern;
- registriertes Mobilfunknetz (2).

2. Das Verfahren des Anspruchs 1, in welchem der benannte ein- oder auszuschaltende Dienst (103, 105) unter mehreren Möglichkeiten gewählt wird.

3. Das Verfahren des Anspruchs 1, in welchem der Befehl (7) vom Typ oder den technischen Merkmalen des Mobilgeräts (1) abhängig ist.

4. Das Verfahren eines der Ansprüche 1 bis 3, in welchem die Schaltbedingungen (500-506) mindestens zwei Parameter aus der in Anspruch 1 genannten Liste berücksichtigen.

5. Das Verfahren eines der Ansprüche 1 bis 4, in welchem die Schaltbedingungen mindestens zwei Parameter aus der folgenden Liste berücksichtigen:
- Vorhandensein des Mobilteilnehmers auf einer Liste
- Ereignisse, die von einem Scheduler ausgelöst werden
- Externe Ereignisse
- Vorhandensein von vorbestimmten Mobilgeräten (1)
- Empfang eines Fernsteuerungsbefehls aus einem Mobilgerät (1).

6. Das Verfahren eines der Ansprüche 1 bis 5, in welchem der benannte ein- oder auszuschaltende Dienst (105, 103) unter mindestens zwei der folgenden Möglichkeiten bestimmt wird:
- Kamera
- Blitzgerät
- Anzeige
- Rington
- Alarm
- Vibrierfunktion
- Lautsprecher
- Musik- oder Videowiedergabe
- Sendeteil
- Bluetooth
- IrDA
- WLAN
- Kurzmeldungsdienst
- SIM-Karte
- bestimmte Anwendungen.

7. Das Verfahren eines der Ansprüche 1 bis 6, in welchem die Schaltung durch Start oder Stopp eines Dienstes (103, 105) im Betriebssystem (100) des Mobilgeräts (1) softwaregesteuert erfolgt.

8. Das Verfahren eines der Ansprüche 1 bis 7, in welchem die benannte Schaltung durch Start oder Stopp eines Gerättreibers (103) im Mobilgerät softwaregesteuert erfolgt.

9. Das Verfahren eines der Ansprüche 1 bis 8, in welchem die benannte Schaltung durch Start oder Stopp eines JAVA-Residentsprogramm erfolgt.

10. Das Verfahren eines der Ansprüche 1 bis 9, in welchem der benannte Befehl über einen Kurzmeldungsdienst durch das Mobilfunknetz (2) an das Mobilgerät (1) übertragen wird.

11. Das Verfahren eines der Ansprüche 1 bis 10, in welchem der benannte Befehl als HTML- oder WML-Inhalt durch das Mobilfunknetz (2) an das Mobilgerät (1) übertragen wird.

12. Das Verfahren eines der Ansprüche 1 bis 11, in welchem das Mobilgerät (1) eine Bestätigung an das Ferngerät (22) sendet, wenn der benannte Befehl durchgeführt wird.

13. Das Verfahren eines der Ansprüche 1 bis 12, in welchem das benannte Ferngerät (22), welches das Ein- oder Ausschalten eines Dienstes initiiert, vom Betreiber des Mobilfunknetzes (2) betrieben wird und somit Teil der Infrastruktur dieses Mobilfunknetzes ist.

14. Das Verfahren eines der Ansprüche 1 bis 12, in welchem das benannte Ferngerät (22), welches das Ein- oder Ausschalten eines Dienstes initiiert, von einem Drittanbieter (5) betrieben wird und sich ausserhalb der Infrastruktur des Mobilfunknetzes (2) befindet.

15. Das Verfahren eines der Ansprüche 1 bis 14, in welchem die benannte Drittpartei (5) die Identität der Mobilgeräte (1), welche die benannten Schaltbedingungen erfüllen, nicht ermittelt,
und in welchem die benannte Drittpartei (22) anonyme Ein- oder Ausschaltbefehle (7) sendet.

16. Das Verfahren eines der Ansprüche 1 bis 15, in welchem Parameter, die für die benannten Schaltbedingungen berücksichtigt werden, im Mobilfunknetz (2) ermittelt werden und anonym über einen Anonymisierungs-Proxyserver (8) an die Drittpartei (5) übermittelt werden.

17. Das Verfahren eines der Ansprüche 1 bis 16, in welchem mindestens gewisse benannte Schaltbedingungen im Mobilgerät (1) geprüft werden.

18. Das Verfahren eines der Ansprüche 1 bis 17, in welchem um eine Bestätigung eines Mobilteilnehmers gebeten wird, bevor ein Dienst (105, 103) des Mobilgeräts (1) dieses Mobilteilnehmers ein- oder ausgeschaltet wird.

19. Das Verfahren eines der Ansprüche 1 bis 18, in welchem eine Meldung an das Mobilgerät (1) übermittelt wird, nachdem ein Dienst (103, 105) ein- oder ausgeschaltet wird.

20. Das Verfahren eines der Ansprüche 1 bis 19, in welchem eine Meldung im Voraus an das Mobilgerät (1) übermittelt wird, in welcher angegeben ist, dass ein Dienst (105, 107) nach einer vorbestimmten Zeitspanne ein- oder ausgeschaltet wird.

21. Das Verfahren eines der Ansprüche 18 bis 20, in welchem die benannte Bestätigung oder Meldung im multimodalen Modus während einer Sprachverbindung wiedergegeben wird.

22. Das Verfahren eines der Ansprüche 1 bis 17, in welchem das Ein- oder Ausschalten mindestens eines Dienstes (105, 107) transparent für den Mobilteilnehmer erfolgt.

23. Das Verfahren eines der Ansprüche 1 bis 22, in welchem der Mobilteilnehmer mit einer Option in seinem Mobilgerät angibt, ob gewisse oder alle Dienste aus einem Ferngerät (22) ein- oder ausgeschaltet werden können.

24. Das Verfahren eines der Ansprüche 1 bis 23, in welchem das Ein- oder Ausschalten eines Dienstes (105, 107) vom Betreiber des Mobilfunknetzes verrechnet wird.

25. Das Verfahren eines der Ansprüche 1 bis 24, in welchem eine Vielzahl von Drittparteien (5) auf das benannte Ferngerät (22) über ein Telekommunikationsnetz (4) zugreift, um unterschiedliche Sätze von Schaltbedingungen (500-506) zu bestimmen.

26. Das Verfahren eines der Ansprüche 1 bis 25, in welchem der Betreiber des benannten Ferngeräts (22) einen Befehl (7) einer Drittpartei (5) erst dann an das betreffende Mobilgerät (1) sendet, wenn geprüft worden ist, ob dieser Befehl zulässig ist.

27. Das Verfahren eines der Ansprüche 1 bis 26, in welchem das Ferngerät (22) ein Programm umfasst, mit welchen kontinuierlich oder periodisch geprüft wird, ob das Mobilgerät (1) die Schaltbedingungen erfüllen.

28. Vorrichtung (22), mit folgenden Mitteln:
- Mittel zur Bestimmung und zur nachträglichen Anpassung eines Satzes von Schaltbedingungen (500-506), mit welchen angegeben wird, ob einen Dienst eines Mobilgeräts (1) ein- oder ausgeschaltet werden muss;
- Mittel zum mehrmaligen Test, ob das Mobilgerät (1) die benannten Schaltbedingungen (500-506) erfüllt;
- Mittel zur automatischen Auslösung eines Befehls (7), wenn die Schaltbedingungen (500-506) erfüllt sind;
- Mittel zur Sendung des Befehls (7) an das Mobilgerät (1), wobei der benannte ein- oder auszuschaltende Dienst (103, 105) im benannten Befehl (7) angegeben ist und wobei die Schaltbedingungen (500-506) mindestens einen Parameter aus der folgenden Liste berücksichtigen:
- momentan verfügbare Bandbreite für die Datenübertragung;
- Mobilgerätdichte;
- Netzbelastung;
- Anwesenheit von prioritären Mobilteilnehmern;
- registriertes Mobilfunknetz (2).

29. Datenträger in welchem ein Programm gespeichert ist, welches das Verfahren eines der Ansprüche 1 bis 27 ausführt, wenn es von einem Server durchgeführt wird.

## Claims

1. Method for selectively and remotely switching at least one service (103, 105) of a mobile device (1) registered in a mobile radio network (2) with a command sent from a remote devie (22) without switching off the mobile device (1), **characterized by** the following steps:
determining and subsequently adapting a set of switching conditions (500-506) of a third party (5);
testing in the remote device (22), if the mobile device (1) fulfils the switching condition (500-506);
automatic releasing the command (7), if the switching conditions are fulfilled;
sending the command (7) to the mobile device (1);
receiving the command (7) by the mobile device (1);
switching on or off the service (103, 105) in the mobile device (1), wherein the service (103, 105) to be switched on or off is mentioned in said command (7) and wherein the switching conditions (500-506) consider at least one parameter of the following list:
- presently available bandwidth for the data transmission;
- mobile device density;
- network usage;
- presence of mobile participates with priority;
- registered mobile radio network (2).

2. Method of claim 1, wherein the service (103, 105) to be switched on or off can be selected among several possibilities.

3. Method of claim 1, wherein the command (7) depends on the typ or the technical features of the mobile device (1).

4. Method of one of claims 1 to 3, wherein the switching conditions (500-506) consider at least two parameters from the list mentioned in claim 1.

5. Method of one of claims 1 to 4, wherein the switching conditions comprise at least two parameters of the following list:
- presence of the mobile participate on a list;
- events, which are released by a scheduler;
- external events;
- presence of a predetermined mobile devices (1);
- receiving of a remote control command from a mobile device (1).

6. Method of one of claims 1 to 5, wherein the service (103, 105) to be switched on or off is determined among at least two of the following two possibilities:
- camera;
- flash device;
- display;
- ring tone;
- alarm;
- vibration function;
- speaker;
- music or video reproduction;
- sending section;
- Bluetooth;
- IrDa;
- WLAN;
- short message system service;
- SIM card;
- certain applications.

7. Method of one of claims 1 to 6, wherein the switching is realized in a software controlled way by start or stop of a service (103, 105) in the operating system (100) of the mobile device (1).

8. Method of one of claims 1 to 7, wherein the switching is realized in a software controlled way by start or stop of a hardware driver (103) in the mobile device (1).

9. Method of one of claims 1 to 8, wherein the switching is realized in a software controlled way by start or stop of a JAVA residents program.

10. Method of one of claims 1 to 9, wherein the command is transmitted to the mobile device (1) over a short message service via the mobile radio network (2).

11. Method of one of the claims 1 to 10, wherein the command is transmitted to the mobile device (1) as HTML or WML content via the mobile radio network (2).

12. Method of one of the claims 1 to 11, wherein the mobile device (1) sends a confirmation to the remote device (22), if the command is carried out.

13. Method of one of claims 1 to 12, wherein the remote device (22) which initiates the switching on or off of a service is operated by a provider of the mobile radio network (2) and thus is part of the infrastructure of the mobile radio network.

14. Method of one of claims 1 to 12, wherein the remote device (22) which initiates the switching on or off of a service is operated by a third provider (5) and thus is arranged outside the infrastructure of the mobile radio network (2).

15. Method of one of claims 1 to 14, wherein said third party (5) does not determine the identity of the mobile device (1) which fulfils the switching conditions, and
wherein the third party (22) sends an anonymous switching on or off command.

16. Method of one of claims 1 to 15, wherein parameter which are considered for the switching conditions are determined in the mobile radio network (2) and are transmitted anonymously to the third party (5) over an anonymizing proxy server (8).

17. Method of one of claims 1 to 16, wherein at least some of said switching conditions are checked in the mobile device (1).

18. Method of one of claims 1 to 17, wherein a confirmation of a mobile participant is requested before a service (105, 103) of the mobile device (1) of the mobile participant is switched on or off.

19. Method of one of claims 1 to 18, wherein a notification is transferred to the mobile device (1) after the service (103, 105) is switched on or off.

20. Method of one of claims 1 to 19, wherein a notification is transferred to the mobile device (1) in advance in which is indicated that a service (105, 107) is switched on or off after a predetermined time period.

21. Method of one of claims 18 to 20, wherein said notification or confirmation is reproduced in the multimodal modus during a speech connection.

22. Method of one of claims 1 to 17, wherein the switching on or off of at least one service (105, 107) is transparent for the mobile participant.

23. Method of one of claims 1 to 22, wherein the mobile participant indicates with an option in his mobile device (1), if certain or all services can be switched on or off from a remote device (22).

24. Method of one of claims 1 to 23, wherein the switching on or off of a service (105, 107) is billed by a provider of the mobile radio network.

25. Method of one of claims 1 to 24, wherein a plurality of third parties (5) access the remote device (22) over a telecommunications network (4) in order to determine different sets of switching conditions.

26. Method of one of claims 1 to 25, wherein the provider of the remote device (22) sends only then a command (7) to a third party (5), when it was checked, if the command is admissible.

27. Method of one of claims 1 to 26, wherein the remote device (22) comprises a program with which it is continuously or periodically checked, if the mobile device (1) fulfils the switching conditions.

28. Apparatus (22) with the following means:
- means for determining and subsequently adapting a set of switching conditions (500-506) with which it is indicated, if a service of a mobile device (1) must be switched on or off;
- means for testing several times, if the mobile device (1) fulfils the switching condition (500-506);
- means for automatic releasing the command (7), if the switching conditions are fulfilled;
- means for sending the command (7) to the mobile device (1), wherein the service (103, 105) to be switched on or off is mentioned in said command (7) and wherein the switching conditions (500-506) consider at least one parameter of the following list:
- presently available bandwidth for the data transmission;
- mobile device density;
- network usage;
- presence of mobile participates with priority;
- registered mobile radio network (2).

29. Data carrier in which is stored a program which performs the method of one of claims 1 to 27, if it is carried out on a server.

## Revendications

1. Procédé pour commander à distance au moins un service (103, 105) d'un dispositif mobile (1) enregistré dans un réseau de communication mobile (2) de manière sélective avec une commande (7) envoyée depuis un dispositif à distance (22), sans éteindre le dispositif mobile (1) complet, **caractérisé par** les étapes suivantes:
déterminer et ultérieurement adapter un jeu de conditions de commutation (500-506) d'un tiers (5);
tester dans le dispositif à distance (22) si le dispositif mobile (1) remplit les conditions de commutation (500-506);
automatiquement envoyer une commande (7) lorsque les conditions de commutation (500-506) sont remplies;
envoyer la commande (7) au dispositif mobile (1);
pour le dispositif mobile (1) de recevoir la commande (7);
démarrer ou arrêter le service (103, 105) dans le dispositif mobile (1), ledit service (103, 105) à démarrer ou arrêter étant indiqué dans ladite commande (7) et les conditions de commutation (500-506) tenant compte d'au moins un paramètre de la liste suivante:
- bande passante actuellement disponible pour la transmission de données;
- densité d'appareils mobiles;
- charge du réseau;
- présence d'abonnés mobiles prioritaires;
- réseau de communication mobile (2) enregistré.

2. Le procédé de la revendication 1, dans lequel ledit service (103, 105) à démarrer ou arrêter est sélectionné parmi plusieurs possibilités.

3. Le procédé de la revendication 1, dans lequel la commande (7) dépend du type ou des caractéristiques techniques du dispositif mobile (1).

4. Le procédé de l'une des revendications 1 à 3, dans lequel les conditions de commutation (500-506) tiennent compte d'au moins deux paramètres de la liste mentionnée à la revendication 1.

5. Le procédé de l'une des revendications 1 à 4, dans lequel les conditions de commutation tiennent compte d'au moins deux paramètres de la liste suivante:
- présence de l'abonné mobile sur une liste
- événements qui sont déclenchés par un planificateur
- événements externes
- présence de dispositifs mobiles prédéterminés (1)
- réception d'une commande à distance à partir d'un dispositif mobile (1).

6. Le procédé de l'une des revendications 1 à 5, dans lequel ledit service (103, 105) à démarrer ou arrêter est déterminé parmi aux moins deux des possibilités suivantes:
- caméra
- appareil de flash
- écran
- sonnerie
- alarme
- fonction de vibration
- haut-parleurs
- reproduction de music ou vidéo
- élément de transmission
- Bluetooth
- IrDA
- WLAN
- SMS
- carte SIM
- certaines applications.

7. Le procédé de l'une des revendication 1 à 6, dans lequel la commutation s'effectuer en démarrant ou arrêtant un service (103, 105) dans le système d'exploitation (100) du dispositif mobile (1) par commande logicielle.

8. Le procédé de l'une des revendications 1 à 7, dans lequel ladite commutation s'effectue en démarrant ou arrêtant un pilote d'appareil (103) dans le dispositif mobile par commande logicielle.

9. Le procédé de l'une des revendications 1 à 8, dans lequel ladite commutation s'effectue en démarrant ou arrêtant un programme résident JAVA.

10. Le procédé de l'une des revendications 1 à 9, dans lequel ladite commande est transmise par le biais d'un SMS au dispositif mobile (1) au travers du réseau de communication mobile (2).

11. Le procédé de l'une des revendications 1 à 10, dans lequel ladite commande est transmise comme contenu HTML ou WML au dispositif mobile (1) au travers du réseau de communication mobile (2).

12. Le procédé de l'une des revendications 1 à 11, dans lequel le dispositif mobile (1) envoie une confirmation au dispositif à distance (22) lorsque ladite commande est exécutée.

13. Le procédé de l'une des revendications 1 à 12, dans lequel ledit dispositif à distance (22), qui initie le démarrage ou le stoppage d'un service, est géré par l'opérateur du réseau de communication mobile (2) et constitue ainsi une partie de l'infrastructure de ce réseau de communication mobile.

14. Le procédé de l'une des revendications 1 à 12, dans lequel ledit dispositif à distance (22), qui initie le démarrage ou le stoppage d'un service, est géré par un prestataire tiers (5) et se situe hors de l'infrastructure du réseau de communication mobile (2).

15. Le procédé de l'une des revendications 1 à 14, dans lequel ledit prestataire tiers (5) ne détermine pas l'identité des dispositifs mobiles (1) qui replissent lesdites conditions de commutation,
et dans lequel ledit prestataire tiers (22) envoie des commandes de démarrage ou de stoppage anonymes.

16. Le procédé de l'une des revendications 1 à 15, dans lequel des paramètres dont il est tenu compte pour lesdites conditions de commutation sont déterminés dans le réseau de communication mobile (2) et transmis de façon anonyme au travers d'un serveur proxy d'anonymisation (8) au prestataire tiers (5).

17. Le procédé de l'une des revendications 1 à 16, dans lequel au moins certaines desdites conditions de commutation sont vérifiés dans le dispositif mobile (1).

18. Le procédé de l'une des revendications 1 à 17, dans lequel une confirmation d'un abonné mobile est requise avant qu'un service (105, 103) du dispositif mobile (1) de cet abonné mobile est démarré ou arrêté.

19. Le procédé de l'une des revendications 1 à 18, dans lequel un message est transmis au dispositif mobile (1) après le démarrage ou le stoppage d'un service (103, 105).

20. Le procédé de l'une des revendications 1 à 19, dans lequel un message est transmis en avance au dispositif mobile (1) et dans lequel il est indiqué qu'un service (105, 107) sera démarré ou arrêté après une période de temps prédéterminée.

21. Le procédé de l'une des revendications 18 à 20, dans lequel ladite confirmation ou ledit message est reproduit en mode multimodal pendant une connexion vocale.

22. Le procédé de l'une des revendications 1 à 17, dans lequel le démarrage ou le stoppage d'au moins un service (105, 107) s'effectue de manière transparente pour l'abonné mobile.

23. Le procédé de l'une des revendications 1 à 22, dans lequel l'abonné mobile indique au moyen d'une option dans son dispositif mobile si certains ou tous les services peuvent être démarrés ou arrêtés depuis un dispositif à distance (22).

24. Le dispositif de l'une des revendications 1 à 23, dans lequel le démarrage ou le stoppage d'un service (105, 107) est facturé par l'opérateur du réseau de communication mobile.

25. Le dispositif de l'une des revendications 1 à 24, dans lequel une pluralité de prestataires tiers (5) accède au dispositif à distance (22) au travers d'un réseau de télécommunications (4) pour déterminer différents jeux de conditions de commutation (500-506).

26. Le dispositif de l'une des revendications 1 à 25, dans lequel l'opérateur dudit dispositif à distance (22) envoie une commande (7) d'un tiers (5) au dispositif mobile (1) en question seulement lorsqu'il a été vérifié si cette commande est admissible.

27. Le dispositif de l'une des revendications 1 à 26, dans lequel le dispositif à distance (22) comprend un programme au moyen duquel il est vérifié en continu ou périodiquement si le dispositif mobile (1) remplit les conditions de commutation.

28. Dispositif (22) comprenant les moyens suivants:
- moyens pour déterminer et ultérieurement adapter un jeu de conditions de commutation (500-506), grâce auxquels il est indiqué si un service d'un dispositif mobile (1) doit être démarré ou arrêté;
- moyens pour tester à plusieurs reprises si le dispositif mobile (1) remplit les conditions de commutation (500-506);
- moyens pour automatiquement envoyer une commande (7) lorsque les conditions de commutation (500-506) sont remplies;
- moyens pour envoyer la commande (7) au dispositif mobile (1), ledit service (103, 105) à démarrer ou arrêter étant indiqué dans ladite commande (7) et les conditions de commutation (500-506) tenant compte d'au moins un paramètre de la liste suivante:
- bande passante actuellement disponible pour la transmission de données;
- densité d'appareils mobiles;
- charge du réseau;
- présence d'abonnés mobiles prioritaires;
- réseau de communication mobile (2) enregistré.

29. Support de données dans lequel un programme est stocké qui met en oeuvre le procédé de l'une des revendications 1 à 27 lorsqu'il est exécuté par un serveur.
